# EUROPÄISCHE PATENTSCHRIFT

(11) **EP 4 139 596 B1**
(45) Veröffentlichungstag und Bekanntmachung des Hinweises auf die Patenterteilung: **18.06.2025**
(21) Anmeldenummer: 20722532.7
(22) Anmeldetag: 24.04.2020
(51) Int. Cl.: F16K 31/06, F16K 39/02, F02B 37/16, F02M 26/26

(54) **SCHUBUMLUFTVENTIL**
BLOW-OFF VALVE
CLAPET DE SURPRESSION

(43) Veröffentlichungstag der Anmeldung: 01.03.2023
(73) Patentinhaber: Pierburg GmbH, 41460 Neuss (DE)
(72) Erfinder: LENK, Martin, 41460 Neuss (DE); THIERY, Michael, 41460 Neuss (DE); CAVDAR, Tanner, 41460 Neuss (DE)
(74) Vertreter: terpatent PartGmbB
(86) Internationale Anmeldenummer: PCT/EP2020/061531
(87) Internationale Veröffentlichungsnummer: WO 2021/213681

(56) Entgegenhaltungen:
- WO-A1-2017/216957
- WO-A1-2019/121305
- WO-A1-2019/121532
- CN-U- 204 611 049
- DE-A1- 102016 118 341
- DE-B3- 102008 005 088

## Beschreibung

Die Erfindung betrifft ein Schubumluftventil mit einem Strömungsgehäuse mit einem Strömungskanal zwischen einem Einlass und einem Auslass, einem zwischen dem Einlass und dem Auslass ausgebildeten Ventilsitz, einem Aktor, einem mittels des Aktors translatorisch bewegbaren Betätigungsglied, einem am Betätigungsglied befestigten Regelkörper, der eine radial äußere umfänglich geschlossene Mantelfläche aufweist, an deren axialen Ende eine umfängliche Auflagekante ausgebildet ist, die auf den Ventilsitz aufsetzbar und vom Ventilsitz abhebbar ist, wobei der Regelkörper an der vom Betätigungsglied weg weisenden axialen Seite eine radial innere axiale Anströmfläche aufweist, und eine Wand aufweist, die sich von der Mantelfläche zumindest radial nach innen erstreckt, und in der zumindest eine Öffnung ausgebildet ist, über die ein Innenraum des Schubumluftventils mit dem Strömungskanal fluidisch verbunden ist.

Schubumluftventile dienen in bekannter Weise zur Rezirkulation von verdichtetem Frischgas, gegebenenfalls mit zurückgeführtem Abgas von der Druckseite eines Verdichters eines Turboladers zurück zur Saugseite des Verdichters. Die Verbindung zwischen der Druckseite und der Saugseite des Verdichters durch eine Bypassleitung wird für den Übergang von einer hohen Last in den Schubbetrieb der Verbrennungskraftmaschine benötigt, um eine hohe Förderung des Verdichters des Turboladers gegen eine geschlossene Drosselklappe und den daraus entstehenden Pumpeffekt zu verhindern.

Schubumluftventile werden häufig elektromagnetisch betätigt, wobei der Regelkörper des Ventils über den Anker durch die elektromagnetische Kraft bewegt wird. Ein gattungsgemäßes Schubumluftventil ist beispielsweise aus der DE 10 2016 118 341 A1, die ein Schubumluftventil gemäß dem Oberbegriff des Anspruchs 1 offenbart, WO 2019 121 305 A1 und WO 2019 121 532 A1 bekannt. Das Ventil weist eine Druckausgleichsöffnung am mit dem Anker verbundenen Regelkörper auf, wodurch bei entsprechender Auslegung der wirksamen Flächen ein Kräftegleichgewicht bezüglich der auf den Regelkörper wirkenden pneumatischen Kräfte hergestellt wird, so dass zur Aktuierung lediglich die Kraft einer Feder überwunden werden muss, wodurch das Schubumluftventil sehr kurze Stellzeiten aufweist. Bei diesem Ventil ist der Verschlusskörper direkt mit dem Anker verbunden und das Innere des Ventils ist über eine Membran vom Außenbereich getrennt. Es ergibt sich dennoch das Problem, dass bei sehr geringen Hüben aus der geschlossenen Position heraus aufgrund des entstehenden dynamischen Drucks der statische Druck sehr schnell fällt, wodurch auf den Regelkörper eine große Kraft in Schließrichtung wirkt.

Des Weiteren ist aus der DE 10 2008 005 088 B3 ein Schubumluftventil bekannt, welches einen Regelkörper aufweist, der eine radial äußere Mantelfläche aufweist, von der aus sich eine axiale Anströmfläche am vom Aktor entfernten Ende nach radial innen erstreckt. Zum Druckausgleich ist zentral am Regelkörper eine Öffnung ausgebildet.

Zusätzlich wird in der CN 204611049 U ein Regelkörper eines Schubumluftventils offenbart, der eine radial äußere Mantelfläche aufweist, von deren zum Aktor weisenden Ende sich eine sich nach radial innen erstreckende axiale Anströmfläche erstreckt, in der Öffnungen zum Druckausgleich ausgebildet sind.

Bei vorherigen Generationen von Schubumluftventilen, wie sie beispielsweise in der EP 1 762 712 B1 beschrieben werden, wurde versucht, diesen geringen beim Öffnen entstehenden statischen Druck auch auf die entgegengesetzte Seite des Regelkörpers zu übertragen, indem die Öffnungen direkt an den schmalen Öffnungsbereich herangeführt wurden. Dies führt jedoch dazu, dass relativ große Federkräfte zum Schließen zur Verfügung gestellt werden müssen und somit auch relativ große Kräfte zum Initiieren der Öffnungsbewegung durch den Elektromagneten, der entsprechend groß ausgeführt werden muss.

Es stellt sich daher die Aufgabe, ein Schubumluftventil zur Verfügung zu stellen, mit dem einerseits sehr schnelle Stellzeiten realisiert werden können und andererseits geringe elektromagnetische Stellkräfte benötigt werden, wodurch der Bauraum des Schubumluftventils und insbesondere der Raum für den Elektromagneten verringert werden kann und somit das Schubumluftventil kostengünstiger hergestellt werden kann.

Diese Aufgabe wird durch ein Schubumluftventil mit den Merkmalen des Hauptanspruchs 1 gelöst.

Der Regelkörper des erfindungsgemäßen Schubumluftventils weist eine radial äußere, umfänglich geschlossene Mantelfläche auf, an deren axialen Ende eine umfängliche Auflagekante ausgebildet ist, die auf den Ventilsitz aufsetzbar und vom Ventilsitz abhebbar ist, wobei unter Auflagekante eine schmale kreisringförmige Fläche zu verstehen ist, die schmal zum Ventilsitz zuläuft. Der Regelkörper weist des Weiteren an der vom Betätigungsglied weg weisenden axialen Seite eine radial innere axiale Anströmfläche auf, welche über eine sich zumindest radial erstreckende Wand, zumindest indirekt mit der Mantelfläche verbunden ist. In dieser Wand ist zumindest eine Öffnung ausgebildet, über die ein Innenraum des Schubumluftventils mit dem Strömungskanal fluidisch verbunden ist, so dass unterhalb und oberhalb des Regelkörpers, zumindest solange dieser nicht bewegt wird, der gleiche Druck anliegt. Eine radial äußere Abströmkante der axialen Anströmfläche ist in axialer Richtung zur Auflagekante maximal so weit versetzt, dass ein erster Vektor von der radial äußeren Abströmkante zum nächstgelegenen Punkt der Auflagekante zu einer Ebene, die durch die Auflagekante aufgespannt wird, maximal einen Winkel von 15° einschließt. Dies bedeutet, dass zwischen der Abströmkante der Anströmfläche und der Auflagekante des Regelkörpers lediglich ein geringer axialer Versatz vorliegt. Dies hat zur Folge, dass der Luftstrom beim ersten Öffnen des Ventils etwa in Richtung des freien Spaltes zwischen dem Ventilsitz und der Auflagekante des Regelkörpers geleitet wird. Des Weiteren ist die sich zumindest radial erstreckende Wand mit der zumindest einen Öffnung zu der Auflagekante und zu der Abströmkante axial in Richtung des Betätigungsgliedes versetzt. Durch den axialen Abstand der Wand zur Auflagekante wirkt die in Schließrichtung beim Öffnen wirkende Druckdifferenz, die durch die Strömung entsteht, lediglich auf die dünne Auflagekante, so dass nur eine sehr geringe Schließkraft auf den Regelkörper wirkt. Durch die Leitung des Stroms in den Spalt und die geringe zur Verfügung stehende Angriffsfläche für den dabei entstehenden Druck entsteht eine gleichmäßige Kraftverlaufskurve beim Öffnen mit geringen notwendigen Öffnungskräften. So kann der Elektromagnet kleiner gebaut werden und dennoch schnelle Öffnungs- und Schließzeiten realisiert werden.

Die axiale Anströmfläche ist an einem Anströmelement mit einem zum Betätigungsglied weisenden geschlossenen Boden und einem vom Betätigungsglied weg weisenden offenen axialen Ende ausgebildet, an dem die radial äußere Abströmkante ausgebildet ist. Die Anströmfläche wird somit durch einen etwa topfförmigen Körper gebildet, der einfach herzustellen ist und zur erleichterten Befestigung des Regelkörpers am Betätigungsglied genutzt werden kann, indem der Boden zentral am Betätigungsglied durch Schweißen befestigt wird.

Vorzugsweise weist ein Tangentenvektor an einen Punkt der radial äußeren Abströmkante in einen vom Betätigungsglied abgewandten Bereich, der sich axial unmittelbar an die Auflagekante anschließt. Daraus folgt, dass die Strömung beim beginnenden Öffnungsvorgang unmittelbar in den Spalt zwischen dem Ventilsitz und der Auflagekante geleitet wird, wodurch die in Schließrichtung auf den Regelkörper aufgrund des Luftstromes wirkende Kraft deutlich verringert wird.

Des Weiteren ist es vorteilhaft, wenn die sich zumindest radial erstreckende Wand so weit in Richtung zum Betätigungsglied versetzt ist, dass ein zweiter Vektor in radialer Richtung nach außen von der sich zumindest radial erstreckenden Wand zur Auflagekante zu einer Ebene, die durch die Auflagekante aufgespannt wird, mindestens einen Winkel von 20° einschließt. Dies hat zur Folge, dass die Wand so weit zurückversetzt ist, dass der abfallende Druck im Spalt nicht unmittelbar auf die Wandfläche wirken kann, wodurch die in Schließrichtung auf den Regelkörper wirkende Kraft verringert wird. Unter radial nach außen ist in diesem Zusammenhang lediglich zu verstehen, dass der Vektor eine radiale Komponente aufweist, welche von der Mittelachse des Schubumluftventils weg weist. Selbstverständlich wird jedoch auch eine Erstreckungskomponente des Vektors in axialer Richtung vorliegen. Dies gilt für alle in dieser Anmeldung genannten Vektoren, die definitionsgemäß nach radial außen weisen.

Weiterhin ist es bevorzugt, dass die Öffnung so weit in Richtung zum Betätigungsglied versetzt ist, dass ein dritter Vektor in radialer Richtung nach außen von der Öffnung zur Auflagekante zu einer Ebene, die durch die Auflagekante aufgespannt wird, mindestens einen Winkel von 30° einschließt und dass ein vierter Vektor in radialer Richtung nach außen von der Abströmkante zu der Öffnung zu einer Ebene, die durch die Auflagekante aufgespannt wird, mindestens einen Winkel von 30° einschließt. Auf diese Weise bleibt das Kräftegleichgewicht auch bei plötzlichen Stellungs- und damit Druckänderungen an der zum Einlass gewandten Fläche an den beiden axialen Enden der Öffnungen erhalten, wodurch kurze Stellzeiten erreicht und geringe Stellkräfte benötigt werden.

Vorzugsweise ist die umfänglich geschlossene Mantelfläche durch einen zylindrischen Körper und einen radial äußeren und axial zum Ventilsitz weisenden Bereich eines inneren Hohlkörpers gebildet, auf dem der zylindrische Körper befestigt ist, wobei der innere Hohlkörper mit dem Betätigungsglied bewegungsgekoppelt ist und die Wand mit der zumindest einen Öffnung und die Auflagekante aufweist. Diese Ausführung erleichtert den Zusammenbau des Regelkörpers.

In einer weiterführenden Ausbildung der Erfindung ist die radial äußere Abströmkante an einem Kragen ausgebildet, der sich vom offenen axialen Ende des Anströmelementes aus radial nach außen und gegebenenfalls axial erstreckt. So kann ohne zusätzliche Bauteile eine entsprechend ausgerichtete Abströmkante zur Verfügung gestellt werden.

Dabei ist es vorzugsweise möglich, dass der Kragen einen größeren axialen Abstand zum Betätigungsglied aufweist als die Auflagekante und erstreckt sich im radial äußeren Bereich ausschließlich radial nach außen. In diesem Fall würde die Strömung radial nach außen und damit beim beginnenden Öffnungsvorgang in den Spalt zwischen dem Ventilsitz und der Auflagekante geleitet.

In einer alternativen Ausführungsform weist der Kragen einen kleineren axialen Abstand zum Betätigungsglied auf als die Auflagekante und erstreckt sich im radial äußeren Bereich radial nach außen und axial in einer vom Betätigungsglied weg weisenden Richtung. Auch in diesem Fall weist die Abströmkante in den Spalt zwischen dem Regelkörper und dem Ventilsitz unmittelbar nach dem Einleiten des Öffnungsvorgangs. In beiden alternativen Ausführungen wird die auf den Regelkörper wirkende Schließkraft im Vergleich zu bekannten Ausführungsformen kurz nach dem Einleiten des Öffnungsvorgangs verringert.

Vorzugsweise weist der innere Hohlkörper ein Einlegeteil auf, das zumindest teilweise mit einem elastomeren Kunststoff beschichtet ist, wobei der innere Hohlkörper mit dem Kunststoff auf den Ventilsitz absenkbar ist und gegen das Betätigungsglied anliegt. Durch diese Kunststoffbeschichtung an der Auflagekante wird ein dichter Ventilsitz sichergestellt, da geringe Unebenheiten durch die Elastizität ausgeglichen werden können. Die Kunststoffbeschichtung im Bereich der Anlage am Betätigungsglied sorgt dafür, dass der Regelkörper geringfügig zum Betätigungsglied gekippt werden kann, was ebenfalls zu einer verbesserten Dichtheit führt.

Hierzu ist das Anströmelement mit dem Boden am Betätigungsglied befestigt. Der Boden kann durch einfaches Laserschweißen am Betätigungsglied befestigt werden.

Zur Befestigung des gesamten Regelkörpers weist das Anströmelement eine radiale Erweiterung auf, mit der das Anströmelement zumindest im geöffneten Zustand gegen eine radiale Einschnürung des inneren Hohlkörpers anliegt. Der innere Hohlkörper ist entsprechend zum Anströmelement, welches am Betätigungsglied befestigt ist, und damit zur äußeren Mantelfläche und zur Anlagekante geringfügig kippbar.

Eine besonders günstige Herstellung ergibt sich, wenn der zylindrische Körper, der innere Hohlkörper und das Anströmelement als Tiefziehteile aus Blech hergestellt sind.

Vorzugsweise ist der Aktor ein Elektromagnet und das Betätigungsglied der Anker des Elektromagneten. So werden kurze Stellzeiten ermöglicht.

Es wird somit ein Schubumluftventil geschaffen, welches eine hohe Haltbarkeit und Dichtheit aufweist. Vor allem aber kann die Baugröße des Elektromagneten und damit die Herstellkosten deutlich reduziert werden, da die beim Öffnungsvorgang zu überwindenden Kräfte durch die besondere Abströmung vom Anströmelement verringert werden, indem einerseits die Richtung der Strömung optimal eingestellt wird und andererseits die für eine Druckdifferenz zur Verfügung stehenden Angriffsflächen verringert werden.

Ein Ausführungsbeispiel eines erfindungsgemäßen Schubumluftventils ist in den Figuren dargestellt und wird nachfolgend beschrieben.

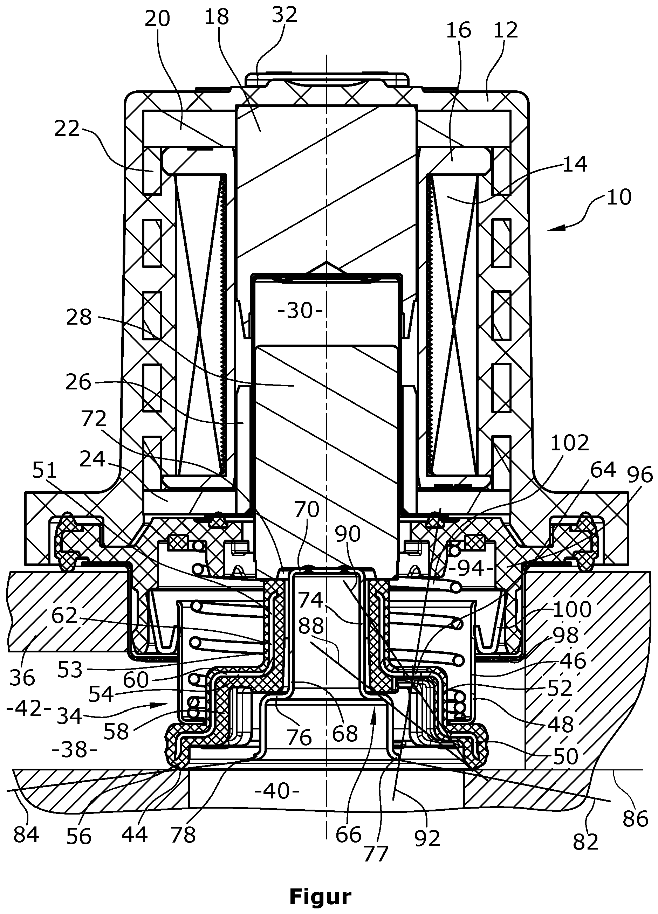

Die Figur zeigt eine Seitenansicht eines erfindungsgemäßen Schubumluftventils in geschnittener Darstellung.

Das in der Figur dargestellte Schubumluftventil besteht aus einem als Elektromagneten ausgeführten Aktor 10, in dessen Gehäuse 12 eine Spule 14 auf einem Spulenträger 16 gewickelt ist. Im radial inneren Bereich des Spulenträgers 16 ist ein magnetisierbarer Kern 18 befestigt, dessen axiales Ende über den Spulenträger 16 hinausragt, wobei der Kern 18 an diesem axialen Ende von einem Rückschlussblech 20 umgeben ist, welches in Verbindung mit einem die Spule 14 umgebenden Eisenmantel 22 steht. Am zum Kern 18 entgegengesetzten Ende des Spulenträgers 16 befindet sich ein weiteres Rückschlussblech 24, welches im radial äußeren Bereich mit dem Eisenmantel 22 und im radial inneren mit einer Gleitbuchse 26 in Kontakt steht, der sich in den Spulenträger 16 erstreckt. In der Gleitbuchse 26 ist ein als Betätigungsglied 28 wirkender Anker gelagert. Dieser Anker wird bei Bestromung der Spule 14 durch die elektromagnetische Kraft zum Kern 18 und in dessen Ausnehmung 30 gezogen. Die Stromversorgung der Spule 14 erfolgt über Kontakte, die in einen Stecker 32 münden.

Am Betätigungsglied 28 ist ein Regelkörper 34 befestigt, mittels dessen ein Durchströmungsquerschnitt eines in einem Strömungsgehäuse 36 ausgebildeten Strömungskanals 38, der einen Einlass 40 mit einem Auslass 42 verbindet, freigegeben oder abgesperrt werden kann, indem der Regelkörper 34 auf einen den Durchströmungsquerschnitt umgebenden Ventilsitz 44 abgesenkt oder von diesem abgehoben wird.

Der Regelkörper 34 besteht aus einer radial äußeren, über den Umfang geschlossenen zylindrischen Mantelfläche 46, die durch einen radial äußeren zylindrischen Körper 48, der beispielsweise aus Blech durch Tiefziehen hergestellt wird und einem radial äußeren sowie axial zum Ventilsitz 44 weisenden Bereich 50 eines inneren Hohlkörpers 52 gebildet ist.

Der innere Hohlkörper 52 besteht aus einem durch Tiefziehen aus Blech herstellbarem Einlegeteil 51 und weist eine Wand 54 auf, die zumindest eine radiale Erstreckungskomponente nach innen aufweist beziehungsweise sich zumindest abschnittsweise radial nach innen erstreckt. Das Einlegeteil 51 ist zur Bildung des inneren Hohlkörpers 52 mit einem elastomeren Kunststoff 53 umspritzt, welches im radial äußeren und axial zum Ventilsitz 44 weisenden Bereich 50 eine Auflagekante 56 ausbildet, mit der der Regelkörper 34 im geschlossenen Zustand des Schubumluftventils auf dem Ventilsitz 44 aufliegt. Der wirksame Durchmesser zur Auflage auf dem Ventilsitz 44 entspricht im Wesentlichen dem Durchmesser der zylindrischen Mantelfläche 46, wodurch ein Kräftegleichgewicht der wirkenden pneumatischen Kräfte am Regelkörper 34 im statischen Zustand hergestellt wird.

Die Wand 54 des inneren Hohlkörpers 52 ist in einem ersten Abschnitt 58 zylindrisch ausgebildet. An diesen zylindrischen Abschnitt 58 schließt sich eine radiale Einschnürung 60 an, von deren Innendurchmesser sich ein weiterer zylindrischer Abschnitt 62 in Richtung des Betätigungsgliedes 28 erstreckt, der entsprechend einen kleineren Durchmesser aufweist, als der erste zylindrische Abschnitt 58. An seinem axialen Ende ist der zylindrische Abschnitt 62 geringfügig nach innen gebogen. Im Bereich der radialen Einschnürung 60 sind mehrere Axialbohrungen ausgebildet, die als Öffnungen 64 einen Druckausgleich zwischen der Unterseite und der Oberseite des Regelkörpers 34 ermöglichen.

Die zylindrischen Abschnitte 58, 62 sowie die Einschnürung 60 sind mit Ausnahme der Öffnungen 64 mit dem elastomeren Kunststoff 53 umspritzt, welches axial in Richtung zum Betätigungsglied 28 über den zylindrischen Abschnitt 62 ragt.

Der Regelkörper 34 weist des Weiteren eine radial innere axiale Anströmfläche 66 auf, die im vorliegenden Ausführungsbeispiel an einem Anströmelement 68 ausgebildet ist, welches dazu dient den Regelkörper 34 am Betätigungsglied 28 zu befestigen. Das Anströmelement 68 kann ebenfalls durch Tiefziehen hergestellt werden und ist im Wesentlichen topfförmig ausgebildet, wobei ein Boden 70 in einer zentralen kreisförmigen Ausnehmung 72 am axialen Ende des Betätigungsgliedes 28 angeordnet und an dieser Stelle durch Schweißen befestigt ist. Ein sich an den Boden 70 anschließender zylindrischer Abschnitt 74 erstreckt sich bis zum vom Betätigungsglied 28 weg weisenden Ende des Elastomers 53 am inneren Hohlkörper 52 und weist einen Außendurchmesser auf, der kleiner ist als der Innendurchmesser des elastomeren Kunststoffs 53. An diesen zylindrischen Abschnitt 74 schließt sich an der zum Boden 70 entgegengesetzten axialen Seite eine radiale Erweiterung 76 in Ringform an, die radial über das Elastomer 53 ragt, und deren Außendurchmesser somit größer ist als der Innendurchmesser der Einschnürung 60 des inneren Hohlkörpers 52. Der Abstand der radialen Erweiterung 76 zum Boden 70 des Anströmelementes 68 wird dabei so gewählt, dass ein geringer Spalt zwischen dem die Einschnürung 60 des inneren Hohlkörpers 52 umgebenden Elastomer 53, wenn der Hohlkörper 52 am Betätigungsglied 28 anliegt, und der Erweiterung 76 des Anströmelementes 68 verbleibt, so dass die Mantelfläche 46 geringfügig zum Anströmelement 68 und somit auch zum Betätigungsglied 28 gekippt werden kann. So wird eine kardanische Befestigung des Regelkörpers 34 am Betätigungsglied 28 verwirklicht. Vom radial äußeren Ende der radialen Erweiterung 76 erstreckt sich das Anströmelement 68 axial bis kurz vor die Auflagekante 56. Ein vom Boden 70 weg weisendes Ende des Anströmelementes 68 ist als Kragen 77 ausgebildet, der sich geringfügig axial und radial erstreckt. Dessen radial äußeres Ende bildet eine ringförmige Abströmkante 78, durch die eine Strömung auf eine radial innere axiale Anströmfläche 66 des Anströmelementes 68 entsprechend in Richtung des Auslasses 42 ablenkt, wobei die radial innere, axiale Anströmfläche 66 durch die axial zum Einlass 40 weisenden und sich im Wesentlichen radial erstreckenden Abschnitte des Anströmelementes 68 gebildet wird. Genauer spezifiziert weist ein Tangentenvektor 82 an die Abströmkante 78, also eine Tangente an die Fläche des Kragens 77, die im radial äußeren Bereich zum Einlass 40 hingerichtet ist, in einen Bereich, der geringfügig weiter vom Aktor 10 entfernt ist als die Auflagekante 56. Somit weist dieser Vektor bei leicht geöffnetem Ventil in einen Spalt zwischen dem Ventilsitz 44 und der Auflagekante 56.

Neben dieser Ausrichtung der Abströmkante 78 zur Auflagekante 56 und der damit verbundenen Strömungsleitung ist auch deren Anordnung zueinander wichtig. So sollte die Abströmkante 78 zur Auflagekante 56 axial nur so weit versetzt sein, dass ein erster Vektor 84, der an der Abströmkante 78 beginnt und nach radial außen auf die Auflagekante 56 gerichtet ist zu einer Ebene 86, die durch die Auflagekante 56 aufgespannt wird, einen Winkel von maximal 15° einschließt, wobei es unabhängig ist in welche Richtung dieser Winkel gemessen wird. Im vorliegenden Fall ist die Abströmkante 78 im Vergleich zur Auflagekante 56 geringfügig zum Betätigungsglied 28 versetzt angeordnet, wobei sich ein Winkel von etwa 8° ergibt.

Des Weiteren ergibt sich ein deutlicher Einfluss durch die Anordnung der Wand 54 sowie der Öffnungen 64 zu der Auflagekante 56 und zur Abströmkante 78. So sollte ein zweiter Vektor 88, der sich von einem beliebigen Punkt der Wand 54 radial nach außen in Richtung zur Auflagekante 56 erstreckt, zu der Ebene 86, die durch die Auflagekante 56 aufgespannt wird, einen Winkel von mindestens 20° einschließen. Im Ausführungsbeispiel liegt dieser Winkel zwischen 40° und 70°.

Zusätzlich sollte auch ein Winkel zwischen einem dritten Vektor 90, der sich von einer der Öffnungen 64 nach radial außen zur Auflagekante 56 erstreckt, zur Ebene 86 mindestens 30° betragen. Dieser beträgt im vorliegenden Ausführungsbeispiel etwa 60°. Auch ein Winkel zwischen einem vierten Vektor 92, der sich von der Abströmkante nach radial außen zu einer der Öffnungen 64 erstreckt, sollte zur Ebene 86 mindestens 30° betragen. Dieser Winkel beträgt im vorliegenden Ausführungsbeispiel etwa 66°.

Durch diese Anordnung der Abströmkante 78, der Auflagekante 56 sowie der Wand 54 und der Öffnungen 64 zueinander ergibt sich beim Öffnen beinahe keine Angriffsfläche für einen sich verringernden Druck im Spalt zwischen dem Ventilsitz 44 und dem Regelkörper 34 aufgrund der Strömung. Auch wird die sonst aufgrund der Strömung entstehende Druckdifferenz durch das gezielte Einleiten der Strömung in den Spalt reduziert.

Des Weiteren ist im Gehäuse 12 des Schubumluftventils ein Innenraum 94 ausgebildet, in den der Regelkörper 34 bei Betätigung des Ventils eintauchen kann. Dieser Innenraum 94 wird radial von einer Gehäusewand 96 begrenzt, an deren vom Aktor 10 abgewandten Ende eine ringförmige Platte 98 befestigt ist, deren Innendurchmesser geringfügig größer ist als der Außendurchmesser der äußeren Mantelfläche 46. Auf dieser Platte 98 liegt eine V-förmige Dichtung 100 mit zwei Schenkeln auf, von denen der erste gegen die umfänglich geschlossene Mantelfläche 46 anliegt, und deren zweiter Schenkel gegen die radial begrenzende Gehäusewand 96 anliegt, so dass der Innenraum 94 im geschlossenen Zustand des Ventils ausschließlich über die Öffnungen 64 mit dem darunter liegenden Einlass 40 verbunden ist. Um auch die zentrale Ausnehmung 30 zwischen dem Betätigungsglied 28 und dem Kern 18 mit einem entsprechenden Druck zu versorgen und so ein druckausgeglichenes Ventil zu schaffen, sind am Außenumfang des Betätigungsgliedes 28 ein oder mehrere Nuten angeordnet.

Des Weiteren ist im Innern der äußeren Mantelfläche 46 eine Feder 102 angeordnet, die axial gegen die Wand 54 anliegt, und deren entgegengesetztes axiales Ende gegen das Gehäuse 12 des Aktors 10 anliegt, wodurch bei Nichtbestromung der Spule 14 der Regelkörper 34 in seinen auf dem Ventilsitz 44 aufliegenden Zustand gestellt wird. In diesem statischen Zustand besteht ein Kräftegleichgewicht, so dass die Feder 102 so ausgelegt werden kann, dass das Schubumluftventil auch bei auftretenden Druckpulsationen im geschlossenen Zustand verbleibt.

Zum Öffnen wird der Aktor 10 bestromt, wobei lediglich die Kraft der Feder 102 überwunden werden muss. Sobald ein Spalt zwischen dem Ventilsitz 44 und der Auflagekante 56 freigegeben wird entsteht eine Strömung durch diesen Spalt. Ein Einfluss der hierdurch entstehenden statischen Druckschwankungen wird weitestgehend vermieden, da die Wand 54 ausreichend weit vom Ventilsitz 44 entfernt ist und lediglich die dünne Auflagekante 56 als Angriffsfläche für die Druckdifferenz dienen kann. Auch kann ein Druckausgleich im Innenraum 94 erfolgen, da durch die Strömungsleitung mittels des Anströmelementes 68 keine Strömung direkt auf die Öffnungen 64 wirkt, wodurch schneller statischer Druckausgleich unmittelbar beim Öffnen erfolgen kann, der andernfalls gehemmt würde und somit zu einer zusätzlichen in Schließrichtung wirkenden Kraft führen würde.

Entsprechend können sehr schnelle Stellzeiten mit einem sehr kleinen und somit kostengünstig herstellbaren Elektromagneten erzielt werden.

Es sollte deutlich sein, dass die vorliegende Erfindung nicht auf das beschriebene Ausführungsbeispiel begrenzt ist. So kann auch ein anderer Aktor verwendet werden, oder die äußere Mantelfläche und die sich zumindest radial erstreckende Wand einstückig hergestellt werden. Auch kann das Anströmelement gegebenenfalls einstückig mit dem übrigen Regelkörper hergestellt werden oder eine andere konstruktive Ausgestaltung haben, da vor allem die Ausrichtung der Abströmkante funktionell relevant ist. Auch kann gegebenenfalls auf das Elastomer verzichtet werden oder dieses nur im Auflagebereich verwendet werden.

## Patentansprüche

1. Schubumluftventil mit
einem Strömungsgehäuse (36) mit einem Strömungskanal (38) zwischen einem Einlass (40) und einem Auslass (42),
einem zwischen dem Einlass (40) und dem Auslass (42) ausgebildeten Ventilsitz (44),
einem Aktor (10),
einem mittels des Aktors (10) translatorisch bewegbaren Betätigungsglied (28), und
einem am Betätigungsglied (28) befestigten Regelkörper (34), der eine radial äußere umfänglich geschlossene Mantelfläche (46) aufweist, an deren axialem Ende eine umfängliche Auflagekante (56) ausgebildet ist, die auf den Ventilsitz (44) aufsetzbar und vom Ventilsitz (44) abhebbar ist,
wobei der Regelkörper (34) an der vom Betätigungsglied (28) weg weisenden axialen Seite eine radial innere axiale Anströmfläche (66) aufweist, und eine sich zumindest radial erstreckende Wand (54) aufweist, über welche die radial innere axiale Anströmfläche (66) zumindest indirekt mit der Mantelfläche (46) verbunden ist, und die sich von der Mantelfläche (46) zumindest radial nach innen erstreckt, und in der zumindest eine Öffnung (64) ausgebildet ist, über die ein Innenraum (94) des Schubumluftventils mit dem Strömungskanal (38) fluidisch verbunden ist, und wobei die axiale Anströmfläche (66) an einem Anströmelement (68) mit einem zum Betätigungsglied (28) weisenden geschlossenen Boden (70) und einem vom Betätigungsglied (28) weg weisenden offenen axialen Ende ausgebildet ist, an dem eine radial äußere ringförmige Abströmkante (78) der axialen Anströmfläche (66) ausgebildet ist,
**dadurch gekennzeichnet, dass** die Abströmkante (78) in axialer Richtung zur Auflagekante (56) maximal so weit versetzt ist, dass ein erster Vektor (84) nach radial außen von der Abströmkante (78) zum nächstgelegenen Punkt der Auflagekante (56) zu einer Ebene (86), die durch die Auflagekante (56) aufgespannt wird, maximal einen Winkel von 15° einschließt und die sich zumindest radial erstreckende Wand (54) mit der zumindest einen Öffnung (64) zu der Auflagekante (56) und zu der Abströmkante (78) axial in Richtung des Betätigungsgliedes (28) versetzt ist.

2. Schubumluftventil nach Anspruch 1,
**dadurch gekennzeichnet, dass**
ein Tangentenvektor (82) an einen Punkt der radial äußeren Abströmkante (78) in einen vom Betätigungsglied (28) abgewandten Bereich, der sich axial unmittelbar an die Auflagekante (56) anschließt, weist.

3. Schubumluftventil nach Anspruch 1 oder 2,
**dadurch gekennzeichnet, dass**
die sich zumindest radial erstreckende Wand (54) so weit in Richtung zum Betätigungsglied (28) versetzt ist, dass ein zweiter Vektor (88) in radialer Richtung nach außen von der sich zumindest radial erstreckenden Wand (54) zur Auflagekante (56) zu der Ebene (86), die durch die Auflagekante (56) aufgespannt wird, mindestens einen Winkel von 20° einschließt.

4. Schubumluftventil nach einem der vorhergehenden Ansprüche,
**dadurch gekennzeichnet, dass**
die zumindest eine Öffnung (64) so weit in Richtung zum Betätigungsglied (28) versetzt ist, dass ein dritter Vektor (90) in radialer Richtung nach außen von der zumindest einen Öffnung (64) zur Auflagekante (56) zu der Ebene (86), die durch die Auflagekante (56) aufgespannt wird, mindestens einen Winkel von 30° einschließt und dass ein vierter Vektor (92) in radialer Richtung nach außen von der Abströmkante (78) zu der Öffnung (64) zu der Ebene (86), die durch die Auflagekante (56) aufgespannt wird, mindestens einen Winkel von 30° einschließt.

5. Schubumluftventil nach einem der vorhergehenden Ansprüche,
**dadurch gekennzeichnet, dass**
die umfänglich geschlossene Mantelfläche (46) durch einen zylindrischen Körper (48) und einen radial äußeren und axial zum Ventilsitz (44) weisenden Bereich (50) eines inneren Hohlkörpers (52), gebildet ist, auf dem der zylindrische Körper (48) befestigt ist, wobei der innere Hohlkörper (52) mit dem Betätigungsglied (28) bewegungsgekoppelt ist und die Wand (54) mit der zumindest einen Öffnung (64) und die Auflagekante (56) aufweist.

6. Schubumluftventil nach einem der vorhergehenden Ansprüche,
**dadurch gekennzeichnet, dass**
die radial äußere Abströmkante (78) an einem Kragen (77) ausgebildet ist, der sich vom offenen axialen Ende des Anströmelementes (68) aus radial nach außen und gegebenenfalls axial erstreckt.

7. Schubumluftventil nach Anspruch 6,
**dadurch gekennzeichnet, dass**
der Kragen (77) einen größeren axialen Abstand zum Betätigungsglied (28) aufweist als die Auflagekante (56) und sich im radial äußeren Bereich ausschließlich radial erstreckt.

8. Schubumluftventil nach Anspruch 6,
**dadurch gekennzeichnet, dass**
der Kragen (77) einen kleineren axialen Abstand zum Betätigungsglied (28) aufweist als die Auflagekante (56) und sich im radial äußeren Bereich radial nach außen erstreckt und axial in einer vom Betätigungsglied (28) weg weisenden Richtung erstreckt.

9. Schubumluftventil nach einem der Ansprüche 5 bis 8,
**dadurch gekennzeichnet, dass**
der innere Hohlkörper (52) ein Einlegeteil (51) aufweist, das zumindest teilweise mit einem elastomeren Kunststoff (53) beschichtet ist, wobei der innere Hohlkörper (52) mit dem elastomeren Kunststoff (53) auf den Ventilsitz (44) absenkbar ist und gegen das Betätigungsglied (28) anliegt.

10. Schubumluftventil nach einem der vorhergehenden Ansprüche,
**dadurch gekennzeichnet, dass**
das Anströmelement (68) mit dem Boden (70) am Betätigungsglied (28) befestigt ist.

11. Schubumluftventil nach einem der vorhergehenden Ansprüche,
**dadurch gekennzeichnet, dass**
das Anströmelement (68) eine radiale Erweiterung (76) aufweist, mit der das Anströmelement (68) zumindest im geöffneten Zustand gegen eine radiale Einschnürung (60) des inneren Hohlkörpers (52) anliegt.

12. Schubumluftventil nach einem der vorhergehenden Ansprüche,
**dadurch gekennzeichnet, dass**
der zylindrische Körper (48), der innere Hohlkörper (52) und das Anströmelement (68) als Tiefziehteile aus Blech hergestellt sind.

13. Schubumluftventil nach einem der vorhergehenden Ansprüche,
**dadurch gekennzeichnet, dass**
der Aktor (10) ein Elektromagnet ist und das Betätigungsglied (28) der Anker des Elektromagneten ist.

## Claims

1. Blow-off valve comprising
a flow housing (36) with a flow channel (38) between an inlet (40) and an outlet (42),
a valve seat (44) formed between the inlet (40) and the outlet (42), an actuator (10),
an actuating member (28) movable in translation by means of the actuator (10), and
a control body (34) fastened to the actuating member (28), which control body has a radially outer circumferentially closed lateral surface (46), at the axial end of which a circumferential bearing edge (56) is formed, which can be placed onto the valve seat (44) and can be raised from the valve seat (44),
wherein the control body (34) has a radially inner axial inflow surface (66) on the axial side pointing away from the actuating member (28) and
has an at least radially extending wall (54), via which the radially inner axial inflow surface (66) is at least indirectly connected to the lateral surface (46),
which wall extends at least radially inward from the lateral surface (46), and
in which wall at least one opening (64) is formed, via which an interior space (94) of the blow-off valve is fluidically connected to the flow channel (38),
wherein the axial inflow surface (66) is formed on an inflow element (68) with a closed base (70) pointing towards the actuating member (28) and an open axial end pointing away from the actuating member (28), on which open axial end a radially outer annular outflow edge (78) of the axial inflow surface (66) is formed,
**characterized in that**
the outflow edge (78) is offset in the axial direction with respect to the bearing edge (56) at most to such an extent that a first vector (84) radially outward from the outflow edge (78) to the nearest point of the bearing edge (56) encloses at most an angle of 15° with respect to a plane (86) which is spanned by the bearing edge (56),
and the at least radially extending wall (54) with the at least one opening (64) is offset axially in the direction of the actuating member (28) with respect to the bearing edge (56) and with respect to the outflow edge (78).

2. Blow-off valve according to Claim 1,
**characterized in that**
a tangent vector (82) at a point of the radially outer outflow edge (78) points into a region which faces away from the actuating member (28) and which axially directly adjoins the bearing edge (56).

3. Blow-off valve according to Claim 1 or 2,
**characterized in that**
the at least radially extending wall (54) is offset in the direction of the actuating member (28) to such an extent that a second vector (88) in the radial direction outward from the at least radially extending wall (54) to the bearing edge (56) encloses at least an angle of 20° with respect to the plane (86) which is spanned by the bearing edge (56).

4. Blow-off valve according to one of the preceding claims,
**characterized in that**
the at least one opening (64) is offset in the direction of the actuating member (28) to such an extent that
a third vector (90) in the radial direction outward from the at least one opening (64) to the bearing edge (56) encloses at least an angle of 30° with respect to the plane (86) which is spanned by the bearing edge (56), and
a fourth vector (92) in the radial direction outward from the outflow edge (78) to the opening (64) encloses at least an angle of 30° with respect to the plane (86) which is spanned by the bearing edge (56).

5. Blow-off valve according to one of the preceding claims,
**characterized in that**
the circumferentially closed lateral surface (46) is formed by a cylindrical body (48) and a radially outer region (50), which points axially towards the valve seat (44), of an inner hollow body (52), to which the cylindrical body (48) is fastened,
wherein the inner hollow body (52) is coupled in terms of movement to the actuating member (28) and has the wall (54) with the at least one opening (64) and the bearing edge (56).

6. Blow-off valve according to one of the preceding claims,
**characterized in that**
the radially outer outflow edge (78) is formed on a collar (77) which extends radially outward and optionally axially from the open axial end of the inflow element (68).

7. Blow-off valve according to Claim 6,
**characterized in that**
the collar (77) is at a greater axial distance from the actuating member (28) than the bearing edge (56) and extends exclusively radially in the radially outer region.

8. Blow-off valve according to Claim 6,
**characterized in that**
the collar (77) is at a smaller axial distance from the actuating member (28) than the bearing edge (56) and extends radially outward in the radially outer region and extends axially in a direction pointing away from the actuating member (28).

9. Blow-off valve according to one of claims 5 to 8,
**characterized in that**
the inner hollow body (52) has an insert part (51) which is at least partially coated with an elastomeric plastic (53),
wherein the inner hollow body (52) with the elastomeric plastic (53) can be lowered onto the valve seat (44) and bears against the actuating member (28).

10. Blow-off valve according to one of the preceding claims,
**characterized in that**
the inflow element (68) is fastened with the base (70) to the actuating member (28).

11. Blow-off valve according to one of the preceding claims,
**characterized in that**
the inflow element (68) has a radial widening (76) with which the inflow element (68) bears against a radial constriction (60) of the inner hollow body (52) at least in the open state.

12. Blow-off valve according to one of the preceding claims,
**characterized in that**
the cylindrical body (48), the inner hollow body (52) and the inflow element (68) are produced as deep-drawn parts from sheet metal.

13. Blow-off valve according to one of the preceding claims,
**characterized in that**
the actuator (10) is an electromagnet and the actuating element (28) is the armature of the electromagnet.

## Revendications

1. Soupape de ventilation à double flux comprenant
un boîtier d'écoulement (36) avec un canal d'écoulement (38) entre une entrée (40) et une sortie (42),
un siège de soupape (44) réalisé entre l'entrée (40) et la sortie (42), un actionneur (10),
un organe d'actionnement (28) mobile en translation au moyen de l'actionneur (10), et
un corps de régulation (34) fixé à l'organe d'actionnement (28), qui présente une surface d'enveloppe (46) fermée sur la périphérie radialement extérieure, à l'extrémité axiale de laquelle est réalisée une arête d'appui (56) périphérique, qui peut être posée sur le siège de soupape (44) et peut être soulevée du siège de soupape (44),
le corps de régulation (34) présentant sur le côté axial opposé à l'organe d'actionnement (28) une surface d'afflux (66) axiale radialement intérieure, et présentant une paroi (54) s'étendant au moins radialement, par le biais de laquelle la surface d'afflux (66) axiale radialement intérieure est connectée au moins indirectement à la surface d'enveloppe (46), et qui s'étend au moins radialement vers l'intérieur depuis la surface d'enveloppe (46), et dans laquelle est réalisée au moins une ouverture (64), par le biais de laquelle un espace intérieur (94) de la soupape de ventilation à double flux est connecté fluidiquement au canal d'écoulement (38), et la surface d'afflux (66) axiale étant réalisée au niveau d'un élément d'afflux (68) avec un fond (70) fermé tourné vers l'organe d'actionnement (28) et une extrémité axiale ouverte opposée à l'organe d'actionnement (28), au niveau duquel est réalisée une arête d'afflux (78) annulaire radialement extérieure de la surface d'afflux (66) axiale,
**caractérisée en ce que**
l'arête d'afflux (78) est décalée dans la direction axiale par rapport à l'arête d'appui (56) au maximum jusqu'à ce qu'un premier vecteur (84) forme vers l'extérieur radialement depuis l'arête d'afflux (78) jusqu'au point le plus proche de l'arête d'appui (56) par rapport à un plan (86), qui est défini par l'arête d'appui (56), au maximum un angle de 15° et la paroi (54) s'étendant au moins radialement avec l'au moins une ouverture (64) est décalée par rapport à l'arête d'appui (56) et par rapport à l'arête d'afflux (78) axialement dans la direction de l'organe d'actionnement (28).

2. Soupape de ventilation à double flux selon la revendication 1,
**caractérisée en ce que**
un vecteur tangentiel (82) est dirigé vers un point de l'arête d'afflux (78) radialement extérieure dans une région opposée à l'organe d'actionnement (28), qui se raccorde axialement directement à l'arête d'appui (56).

3. Soupape de ventilation à double flux selon la revendication 1 ou 2,
**caractérisée en ce que**
la paroi (54) s'étendant au moins radialement est décalée dans la direction de l'organe d'actionnement (28) jusqu'à ce qu'un deuxième vecteur (88) forme dans la direction radiale vers l'extérieur depuis la paroi (54) s'étendant au moins radialement jusqu'à l'arête d'appui (56) par rapport au plan (86), qui est défini par l'arête d'appui (56), au moins un angle de 20°.

4. Soupape de ventilation à double flux selon l'une quelconque des revendications précédentes,
**caractérisée en ce que**
l'au moins une ouverture (64) est décalée dans la direction de l'organe d'actionnement (28) jusqu'à ce qu'un troisième vecteur (90) forme dans la direction radiale vers l'extérieur depuis l'au moins une ouverture (64) jusqu'à l'arête d'appui (56) par rapport au plan (86), qui est défini par l'arête d'appui (56), au moins un angle de 30° et **en ce qu'**un quatrième vecteur (92) forme dans la direction radiale vers l'extérieur depuis l'arête d'afflux (78) jusqu'à l'ouverture (64) par rapport au plan (86), qui est défini par l'arête d'appui (56), au moins un angle de 30°.

5. Soupape de ventilation à double flux selon l'une quelconque des revendications précédentes,
**caractérisée en ce que**
la surface d'enveloppe (46) fermée sur la périphérie est formée par un corps cylindrique (48) et une région (50) radialement extérieure et dirigée axialement vers le siège de soupape (44) d'un corps creux intérieur (52), sur lequel le corps cylindrique (48) est fixé, le corps creux intérieur (52) étant couplé en mouvement à l'organe d'actionnement (28) et présentant la paroi (54) avec l'au moins une ouverture (64) et l'arête d'appui (56).

6. Soupape de ventilation à double flux selon l'une quelconque des revendications précédentes,
**caractérisée en ce que**
l'arête d'afflux (78) radialement extérieure est réalisée au niveau d'un collet (77), qui s'étend radialement vers l'extérieur et éventuellement axialement à partir de l'extrémité axiale ouverte de l'élément d'afflux (68).

7. Soupape de ventilation à double flux selon la revendication 6,
**caractérisée en ce que**
le collet (77) présente une plus grande distance axiale par rapport à l'organe d'actionnement (28) que l'arête d'appui (56) et s'étend exclusivement radialement dans la région radialement extérieure.

8. Soupape de ventilation à double flux selon la revendication 6,
**caractérisée en ce que**
le collet (77) présente une plus petite distance axiale par rapport à l'organe d'actionnement (28) que l'arête d'appui (56) et s'étend radialement vers l'extérieur dans la région radialement extérieure et s'étend axialement dans une direction opposée à l'organe d'actionnement (28).

9. Soupape de ventilation à double flux selon l'une quelconque des revendications 5 à 8,
**caractérisée en ce que**
le corps creux intérieur (52) présente une partie d'insertion (51) qui est revêtue au moins en partie d'une matière plastique élastomère (53), le corps creux intérieur (52) pouvant être abaissé avec la matière plastique élastomère (53) sur le siège de soupape (44) et s'appliquant contre l'organe d'actionnement (28).

10. Soupape de ventilation à double flux selon l'une quelconque des revendications précédentes,
**caractérisée en ce que**
l'élément d'afflux (68) est fixé avec le fond (70) à l'organe d'actionnement (28).

11. Soupape de ventilation à double flux selon l'une quelconque des revendications précédentes,
**caractérisée en ce que**
l'élément d'afflux (68) présente un élargissement radial (76), avec lequel l'élément d'afflux (68) s'applique au moins dans l'état ouvert contre un rétrécissement radial (60) du corps creux intérieur (52).

12. Soupape de ventilation à double flux selon l'une quelconque des revendications précédentes,
**caractérisée en ce que**
le corps cylindrique (48), le corps creux intérieur (52) et l'élément d'afflux (68) sont fabriqués sous forme de pièces embouties en tôle.

13. Soupape de ventilation à double flux selon l'une quelconque des revendications précédentes,
**caractérisée en ce que**
l'actionneur (10) est un électroaimant et l'organe d'actionnement (28) est l'armature de l'électroaimant.
